# EUROPEAN PATENT SPECIFICATION

(11) **EP 3 725 563 B1**
(45) Date of publication and mention of the grant of the patent: **07.02.2024**
(21) Application number: 18889178.2
(22) Date of filing: 03.12.2018
(51) Int. Cl.: B60C 13/00

(54) **DECORATIVE BODY**
ZIERKÖRPER
CORPS DÉCORATIF

(30) Priority: 12.12.2017 JP 2017238078
(43) Date of publication of application: 21.10.2020
(73) Proprietor: Bridgestone Corporation, Chuo-Ku Tokyo 104-8340 (JP)
(72) Inventor: ISHIKAWA, Naoko, Tokyo 104-8340 (JP)
(74) Representative: Marks & Clerk LLP
(86) International application number: PCT/JP2018/044420
(87) International publication number: WO 2019/116949

(56) References cited:
- WO-A1-2012/032741
- JP-A- 2003 175 707
- JP-A- 2007 091 155
- JP-A- 2008 189 165
- JP-A- 2008 201 384
- JP-A- 2008 273 505
- JP-A- 2013 010 401
- JP-A- 2013 035 313
- JP-A- 2017 081 304
- JP-A- 2017 081 305
- US-A1- 2013 075 005

## Description

### Technical Field

The present invention relates to a decorative body formed on a tire side portion.

### Background Art

Japanese Patent Application Laid-Open (JP-A) Nos. 2013-71572, 2008-273505, 2008-189165, 2012-101754, and Japanese National-Phase Publication No. 2002-522294 disclose tires in which a tire side portion is contoured in order to improve the visual impact of the tire.

### SUMMARY OF INVENTION

### Technical Problem

In the tire disclosed in JP-ANo. 2013-71572, plural pattern elements having the same outline shape and having directionality so as to cause light reflection characteristics to change continuously or in stages along one direction are disposed continuously to each other in a tire circumferential direction and a tire radial direction. The placement direction is varied periodically around the tire circumferential direction, and pattern elements adjacent to each other in the tire radial direction have different placement directions to each other. This placement of pattern elements causes the location where the pattern elements are disposed to appear to have 3D contours to a person observing. However, although any unevenness present at an outer surface of a sidewall portion is rendered less obvious, the intention is not to improve the visual impact of the tire itself.

In the tire disclosed in JP-ANo. 2008-273505, an outer surface of a sidewall portion is formed with concave and convex portions. Reflective faces are provided to the surfaces of at least some of the concave portions, and roughened faces are provided around the reflective faces so as to achieve varying light reflecting properties. Although the external appearance of the tire is improved, the intention is not to improve the visual impact of the tire itself. Moreover, if dirt enters the concave portions of the roughened faces, such dirt is difficult to remove.

In the tire disclosed in JP-ANo. 2008-189165, a ring shaped decorative body configured by a collection of numerous polygonal pyramids is provided to a sidewall portion. Although this makes unevenness caused by a spliced edge or a folded-back edge of a carcass layer that appears at the surface of the sidewall portion less obvious, the intention is not to improve the visual impact of the tire itself.

In the tire disclosed in Japanese National-Phase Publication No. 2002-522294, light reflection is varied between a text portion and a background portion. Although this creates contrast between the text portion and the background portion, enabling the text to be distinguished clearly, the intention is not to improve the visual impact of the tire itself.

The tire disclosed in JP-ANo. 2012-101754 generates a visual effect in which a second decorative body provided within a first decorative body appears to be emphasized, thereby enabling unevenness arising in an outer surface of a sidewall to be less obvious and enabling decorative qualities to be improved. However, the intention is not to improve the visual impact of the tire itself.

The decoration and the like applied to these tire side portions stands out when the tire is observed closely, and the respective technologies described above are employed to make unevenness of the tire side portion appear less obvious, to improve the visual impact of text or the like, and so on. The intention is not to improve the visual impact of the tire.

In consideration of the above circumstances, an object of the present invention is to provide a decorative body capable of improving the visual impact of a tire.

### Solution to Problem

According to a first aspect of the invention there is provided a decorative body as specified in claim 1.

In a decorative body that satisfies all these conditions, for example, light shone onto a tire can be reflected in the direction of an observer at the side of the tire using a number of discrete inclined faces from out of the plural inclined faces having the smallest incline angle. When at least one out of the tire or the observer moves such that the tire and the observer move relative to each other, the inclined faces reflecting the light toward the observer change in a random fashion. Thus, the light appears to twinkle at plural different positions of the decorative body. In other words, the decorative body has an external appearance that appears to sparkle.

"Sparkling" is defined as follows.

A twinkling effect in which highlight points (points that appear brightest when viewed from a given range) on a target appear to change accompanying a change in viewpoint. Also, a twinkling effect in which highlight points change accompanying a change in an illuminating light source when viewed in a static state.

A second aspect is the decorative body according to the first aspect, wherein the incline angle is set within a range of from 4° to 45°.

Setting the incline angle of the inclined face having the smallest incline angle within the range of from 4° to 45° enables the sparkling impression to be emphasized in comparison to cases in which the incline angle is not set within this range.

A third aspect is the decorative body according to the first aspect, wherein the incline angle is set within a range of from 5° to 30°.

Setting the incline angle of the inclined face having the smallest incline angle within the range of from 5° to 30° enables the sparkling impression to be emphasized in comparison to cases in which the incline angle is not set within this range.

A fourth aspect is the decorative body according to any one of the first aspect to the third aspect, wherein the solid shapes include a solid shape that has its greatest height at a side located above an outer side of the bottom face, or a solid shape that has a single apex located above an outer side of the bottom face.

When an inclined face having a small incline angle is compared against an inclined face having a large incline angle in the solid shapes arranged in the tire side portion, the inclined face having a small incline angle will reflect a greater proportion of light from the surroundings toward an observer at the side of the tire than the inclined face having a large incline angle.

When a solid shape that has its greatest height at a side located above an outer side of the bottom face is compared against a solid shape having its greatest height at a side located at a position away from above an outer side of the bottom face, the former solid shape enables a greater surface area to be obtained for the inclined face having the smallest incline angle. This enables the sparkling external appearance of the decorative body to be emphasized.

Moreover, when a solid shape having a single apex (point of greatest height) located above an outer side of the bottom face is compared against a solid shape having an apex located at a position away from above an outer side of the bottom face, the former solid shape enables a greater surface area to be obtained for the inclined face having the smallest incline angle. This enables the sparkling external appearance of the decorative body to be emphasized.

A fifth aspect is the decorative body according to any one of the first aspect to the fourth aspect, wherein a surface area taken up by the inclined faces having the smallest incline angle occupies a range of from 70% to 100% per unit surface area in plan view.

In the solid shapes arranged in the tire side portion, when an inclined face having a small incline angle is compared against an inclined face having a large incline angle, the inclined face having the small incline angle will reflect a larger proportion of light from the surroundings toward an observer at the side of the tire than the inclined face having a large incline angle.

Accordingly, setting the surface area taken up by the inclined faces having the smallest incline angle in the range of from 70% to 100% per unit surface area of the decorative body when the decorative body is viewed in plan view enables the surface area of locations that reflect light toward an observer positioned directly in front of the tire to be secured, such that the locations that reflect light so as to appear to light up appear bright to the observer, enabling the sparkling impression to be promoted. Note that if the surface area taken up by the inclined faces having the smallest incline angle occupies less than 70% per unit surface area of the decorative body, the surface area of the inclined faces that reflect light toward the observer positioned directly in front of the tire decreases, resulting in a somewhat insufficient effect with regard to promoting the sparkling impression.

A sixth aspect is the decorative body of any one of the first aspect to the fifth aspect, wherein the inclined faces having the smallest incline angle are planar faces that are smoother than the tire side portion.

Configuring the inclined faces having the smallest incline angle as planar faces that are smoother than the tire side portion enables the inclined faces to be configured as reflective faces less prone to scattering light than the tire side portion, enables more of the light incident to the reflective faces to be reflected in the direction of the observer, and thus enables the sparkling impression to be enhanced. Moreover, configuring the inclined faces as planar faces enables the surface area that reflects light toward the observer to be increased in comparison to cases in which the inclined faces are curved faces, enabling the inclined faces to appear to light up in their entirety from the perspective of the observer, and thereby enabling the sparkling impression to be enhanced. Note that if the inclined faces were curved, even when the inclined faces appear to light up, the inclined faces would only appear to light up in parts (a location reflecting light toward the observer would only be part of the corresponding inclined face), with the result that the sparkling impression cannot be enhanced as it can be in cases in which the inclined faces are configured by planar faces.

A seventh aspect is the decorative body according to of any one of the first aspect to the sixth aspect, wherein from 3 to 200 of the solid shapes are provided per 1 cm².

In the decorative body, when the number of solid shapes per unit surface area is small, the number of locations that appear to light up is too small, making a sparkling impression difficult to achieve. When the number of solid shapes per unit surface area is too large, the surface area of locations that appear to light up is too small, making it difficult to make the locations that appear to light up appear bright, and thus difficult to achieve a sparkling impression. Thus, from 3 to 200 of the solid shapes are preferably disposed per 1 cm² in order to emphasize the sparkling external appearance of the decorative body.

An eighth aspect is the decorative body according to of any one of the first aspect to the seventh aspect, wherein in a case in which the bottom face is a polygonal shape with four or more sides, a number of faces perpendicular to the bottom face is smaller than a number of sides of the bottom face for some of the plural solid shapes.

In this decorative body, in solid shapes in which the bottom face is a polygonal shape with four or more sides, when the number of faces perpendicular to the bottom face is smaller than the number of sides of the bottom face, at least one inclined face inclined with respect to the bottom face is formed.

When light such as sunlight is shone obliquely downward from above toward a face perpendicular to the bottom face of the solid shape (so as to run parallel to a tire side portion perpendicular to a road surface in a state in which a tire is fitted to a vehicle), and toward a face that is inclined with respect to the bottom face, the face that is inclined with respect to the bottom face is better able to reflect light toward an observer at the side of the tire (directly in front or at an oblique front side of the tire side portion) than the face that is perpendicular to the bottom face. Thus, the decorative body of the eighth aspect, in which the number of inclined faces that can be formed inclined with respect to the bottom face is at least one, enables the sparkling external appearance to be emphasized.

A ninth aspect is the decorative body according to of any one of the first aspect to the eighth aspect, wherein at least some of the plural solid shapes are solid shapes having different heights from each other.

In this decorative body, at least some of the plural solid shapes are solid shapes having different heights to each other, thereby enabling variation in the gradients of the inclined faces to be achieved. In other words, plural solid shapes with inclined faces with different gradients are included in the plural solid shapes, thereby enabling the sparkling external appearance to be emphasized compared to cases in which the inclined faces of the plural solid shapes all have the same gradient.

### Advantageous Effect of Invention

The decorative body of the present invention enables the decorative body to be configured with an external appearance that appears to sparkle, and is thus capable of improving the visual impact of the tire.

### BRIEF DESCRIPTION OF DRAWINGS

Fig. 1 is a plan view (face-on view of a tire) illustrating part of a tire side portion of a tire formed with a decorative body according to an exemplary embodiment in the present invention.
Fig. 2 is an enlarged plan view of a decorative portion illustrated in Fig. 1.
Fig. 3 is a plan view illustrating reflective cells.
Fig. 4 is a plan view illustrating reflective cells with heights of inclined faces of reflective pieces indicated by graded shading.
Fig. 5 is a plan view illustrating dimensions of a first set configured by a pair of reflective pieces.
Fig. 6 is an enlarged plan view illustrating a decorative portion with heights of inclined faces of reflective pieces indicated by graded shading.
Fig. 7(A) is a plan view illustrating a first set, Fig. 7(B) is a plan view illustrating the first set with heights of inclined faces of reflective pieces indicated by graded shading, Fig. 7(C) is a vertical cross-section of the first set, and Fig. 7(D) is a diagram illustrating a relationship between shading density and height dimensions.
Fig. 8(A) is a plan view illustrating one reflective piece of a second set, Fig. 8(B) is a plan view illustrating the other reflective piece of the second set, Fig. 8(C) is a plan view illustrating the second set with heights of inclined faces of the reflective pieces indicated by graded shading, Fig. 8(D) is a cross-section illustrating the one reflective piece of the second set, and Fig. 8(E) is a cross-section illustrating the other reflective piece of the second set.
Fig. 9(A) is a plan view illustrating a third set, Fig. 9(B) is a plan view of the third set with heights of inclined faces of reflective pieces indicated by graded shading, and Fig. 9(C) is a vertical cross-section of the third set.
Fig. 10(A) is a plan view illustrating one reflective piece of a fourth set, Fig. 10(B) is a plan view illustrating the other reflective piece of the fourth set, Fig. 10(C) is a plan view illustrating the fourth set with heights of inclined faces of the reflective pieces indicated by graded shading, Fig. 10(D) is a cross-section illustrating the one reflective piece of the fourth set, and Fig. 10(E) is a cross-section illustrating the other reflective piece of the fourth set.
Fig. 11(A) to Fig. 11(D) are a plan view and perspective views illustrating reflective cells configuring a decorative body according to another exemplary embodiment.
Fig. 12(A) to Fig. 12(D) are a plan view and perspective views illustrating reflective cells configuring a decorative body according to yet another exemplary embodiment.
Fig. 13(A) to Fig. 13(D) are a plan view and perspective views illustrating reflective cells configuring a decorative body according to yet another exemplary embodiment.
Fig. 14(A) to Fig. 14(D) are a plan view and perspective views illustrating reflective cells configuring a decorative body according to yet another exemplary embodiment.

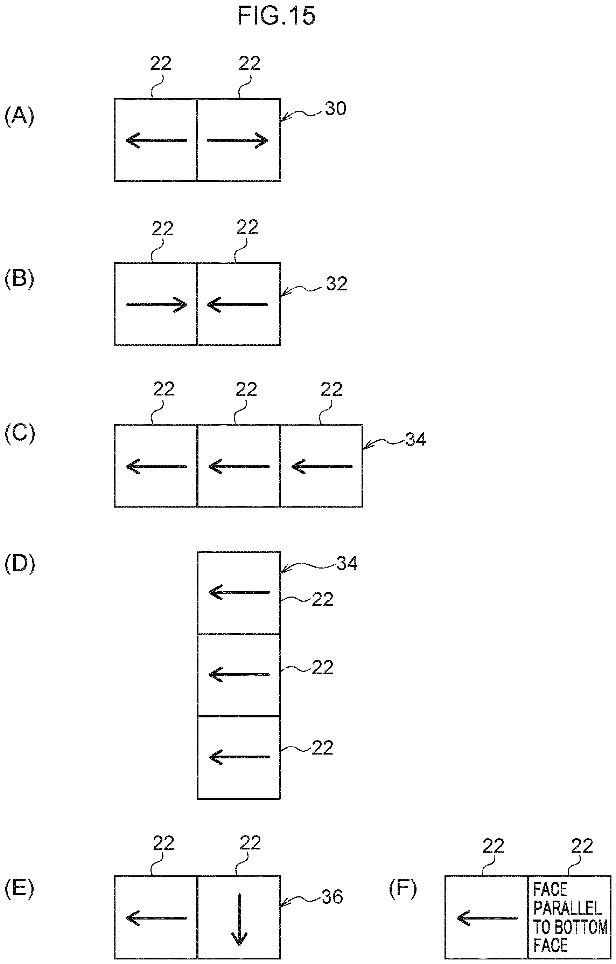

Fig. 15(A) is a plan view illustrating a reflective cell set in which vector start points are adjacent to each other and vector orientations are in opposite directions to each other, Fig. 15(B) is a plan view illustrating a reflective cell set in which vector end points are adjacent to each other and vector orientations are in opposite directions to each other, Fig. 15(C) is a plan view illustrating three consecutive reflective cells (in a lateral direction) in which the vector orientations are in the same direction as each other, Fig. 15(D) is a plan view illustrating three consecutive reflective cells (in a longitudinal direction) in which the vector orientations are in the same direction as each other, Fig. 15(E) is a plan view illustrating a reflective cell set in which the vector orientations are different to each other, and Fig. 15(F) is a plan view illustrating a reflective cell set including a reflective cell with a vector and a reflective cell without a vector (with an apex face running parallel to a bottom face).
Fig. 16 is a plan view illustrating four consecutive reflective cells in a case in which a vector rotation direction changes by the same angle in the same rotation direction.
Fig. 17 is a perspective view to explain an apex face (inclined face) of a reflective cell.
Fig. 18 is a perspective view to explain an angle of an inclined face of a reflective cell.
Fig. 19 is a perspective view illustrating a vector of a triangular column shaped reflective cell.
Fig. 20 is a perspective view illustrating a vector of another triangular column shaped reflective cell.
Fig. 21 is a perspective view illustrating a vector of a square column shaped reflective cell.
Fig. 22 is a perspective view illustrating a vector of another square column shaped reflective cell.
Fig. 23(A) and Fig. 23(B) are a plan view and a side view illustrating three reflective cells having the same vector orientation as each other in plan view, and having inclined faces with the same incline angle as each other.
Fig. 24(A) and Fig. 24(B) are a plan view and a side view illustrating three reflective cells having the same vector orientation as each other in plan view, and having inclined faces with different incline angles to each other.

### DESCRIPTION OF EMBODIMENTS

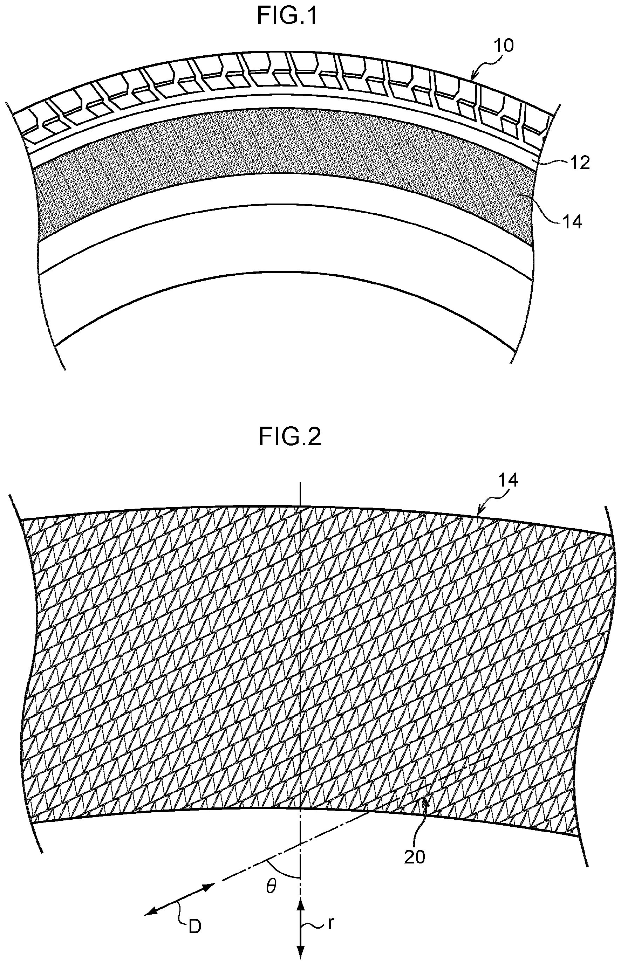

Explanation follows regarding a tire 10 according to an exemplary embodiment in the present invention, with reference to Fig. 1 to Fig. 14.

As illustrated in Fig. 1, a tire side portion 12 of the tire 10 is provided with an annular decorative body 14.

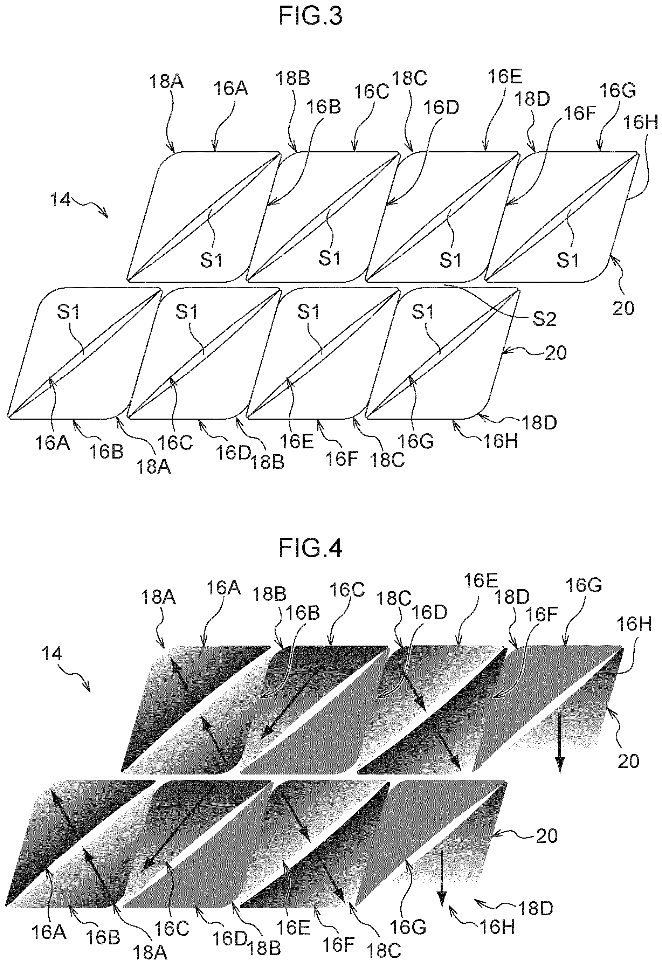

As illustrated in Fig. 2 and Fig. 3, the decorative body 14 is configured by eight types of reflective pieces 16, as an example of solid shapes that appear substantially triangular when the tire side portion 12 is viewed in plan view. Specifically, the reflective pieces 16 are configured by reflective pieces 16A to 16H, the shapes of which will be described in detail later.

As illustrated in Fig. 3, in the present exemplary embodiment a first set 18A, a second set 18B, a third set 18C, and a fourth set 18D are configured as examples of third solid shape pairs having substantially rhomboidal external profiles configured by combining any two of the reflective pieces 16A to 16H so as to oppose each other along their longest sides. In a reflective cell 20 of the present exemplary embodiment, the first set 18A is configured by combining the reflective piece 16A and the reflective piece 16B in a substantially rhombus shape, the second set 18B is configured by combining the reflective piece 16C and the reflective piece 16D in a substantially rhombus shape, the third set 18C is configured by combining the reflective piece 16E and the reflective piece 16F in a substantially rhombus shape, and the fourth set 18D is configured by combining the reflective piece 16G and the reflective piece 16H in a substantially rhombus shape. The first set 18A, the second set 18B, the third set 18C, and the fourth set 18D are arranged in this sequence along one direction (the left-right direction in the illustration of Fig. 3) so as to configure the reflective cell 20 with a narrow elongated substantially parallelogram shaped external profile.

The decorative body 14 of the present exemplary embodiment is configured by tessellating the reflective cells 20 configured as described above as illustrated in Fig. 2, along both the length direction and short direction (a direction orthogonal to the length direction) of the reflective cells 20. As illustrated in Fig. 3, one reflective cell 20 and another reflective cell 20 adjacent in the short direction are disposed slightly offset with respect to one another in the length direction of the reflective cells 20.

As illustrated in Fig. 2, when the tire side portion 12 is viewed in plan view, the reflective cells 20 are disposed such that a length direction D (direction indicated by arrows) of the reflective cells 20 is inclined by 65° (the angle θ in Fig. 2) with respect to a radial direction r (direction indicated by arrows) of the annular decorative body 14.

### Reflective Piece 16A

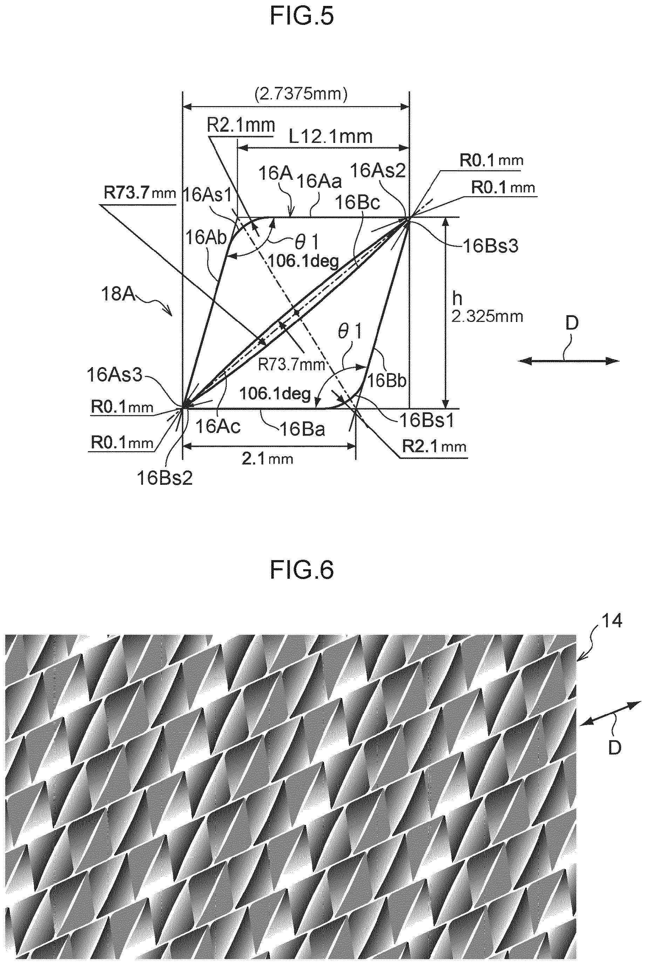

As illustrated in plan view in Fig. 5, the reflective piece 16A includes a first side 16Aa running parallel to the length direction D of the reflective cell 20, a second side 16Ab inclined at a comparatively large angle with respect to the length direction D of the reflective cell 20, and a third side 16Ac, this being the longest side, inclined at a comparatively small angle with respect to the length direction D of the reflective cell 20. Note that the first side 16Aa and the second side 16Ab are straight lines in plan view, whereas the third side 16Ac is curved, for example with a radius of curvature R of 73.7 mm, so as to arch toward the inside of the triangular shape. In the present exemplary embodiment, an angle θ1 formed between the first side 16Aa and the second side 16Ab is 106.1° (deg) in plan view.

The first side 16Aa of the reflective piece 16A has a length L1 of 2.1 mm, and a dimension h in a direction orthogonal to the first side 16Aa is 2.325 mm.

As an example, a connection portion 16As1 between the first side 16Aa and the second side 16Ab is formed in a circular arc shape with a radius of curvature R of 2.1 mm. Moreover, a connection portion 16As2 between the first side 16Aa and the third side 16Ac, and a connection portion 16As3 between the second side 16Ab and the third side 16Ac, are, for example, formed with circular arc shapes with a radius of curvature R of 0.1 mm in plan view.

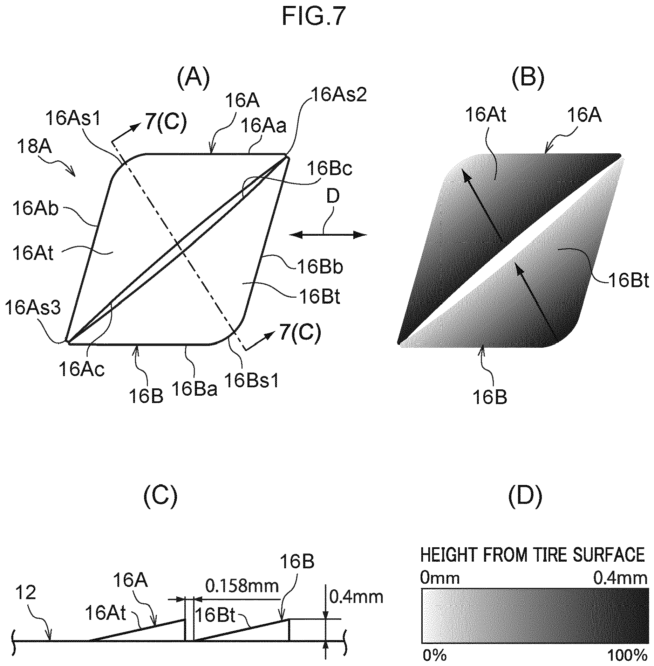

As illustrated in Fig. 7, considered overall, the reflective piece 16A has a triangular column shape that projects out by a short height from a base portion of the tire side portion 12. In the reflective piece 16A, the third side 16Ac has the greatest height, this being a uniform height of 0.4 mm across the entire third side 16Ac. The height of an apex face of the reflective piece 16A (also referred to hereafter as an inclined face 16At) gradually decreases at a uniform incline angle on progression from the third side 16Ac toward the connection portion 16As1 between the first side 16Aa and the second side 16Ab. Namely, the height of the inclined face 16At is lowest (for example a height of 0 mm) at the connection portion 16As1. Note that the inclined face 16At is a planar face.

In Fig. 7(B), an incline direction (downward sloping direction) of the inclined face 16At of the reflective piece 16A is indicated by an arrow. The darker the shading, the higher the location, while the lighter the shading, the lower the location (see Fig. 7(D)).

### Reflective Piece 16B

As illustrated in Fig. 7, the reflective piece 16B includes a first side 16Ba running parallel to the length direction D of the reflective cell 20, a second side 16Bb inclined at a comparatively large angle with respect to the length direction D of the reflective cell 20, and a third side 16Bc, this being the longest side, inclined at a comparatively small angle with respect to the length direction D of the reflective cell 20. As illustrated in Fig. 5, the first side 16Ba and the second side 16Bb of the reflective piece 16B are straight lines in plan view, whereas the third side 16Bc is curved, for example with a radius of curvature R of 73.7 mm, so as to arch toward the inside of the triangular shape. In the present exemplary embodiment, an angle θ1 formed between the first side 16Ba and the second side 16Bb is 106.1° (deg) in plan view.

As an example, a connection portion 16Bs1 between the first side 16Ba and the second side 16Bb is formed in a circular arc shape with a radius of curvature R of 2.1 mm in plan view. Moreover, a connection portion 16Bs2 between the first side 16Ba and the third side 16Bc, and a connection portion 16Bs3 between the second side 16Bb and the third side 16Bc, are, for example, formed with circular arc shapes with a radius of curvature R of 0.1 mm in plan view. In this manner, the plan view profile of the reflective piece 16B has point symmetry to the reflective piece 16A, with the symmetry centered on a center point of the first set 18A that has a substantially rhombus shape in plan view.

As illustrated in Fig. 7, considered overall, the reflective piece 16B has a triangular column shape that projects out by a short height from the base portion of the tire side portion 12. The height of an apex face of the reflective piece 16B (also referred to hereafter as an inclined face 16Bt) is highest at the connection portion 16Bs1 between the first side 16Ba and the second side 16Bb (for example at a height of 0.4 mm), and inclines downward on progression from the connection portion 16Bs1 toward the third side 16Bc, such that the entire third side 16Bc has the lowest height of the reflective piece 16B (for example a uniform height of 0 mm). Note that the inclined face 16Bt is a planar face.

In Fig. 7(B), an incline direction (downward sloping direction) of the inclined face 16Bt of the reflective piece 16B is indicated by an arrow. The darker the shading, the higher the location, while the lighter the shading, the lower the location.

### Reflective Piece 16C

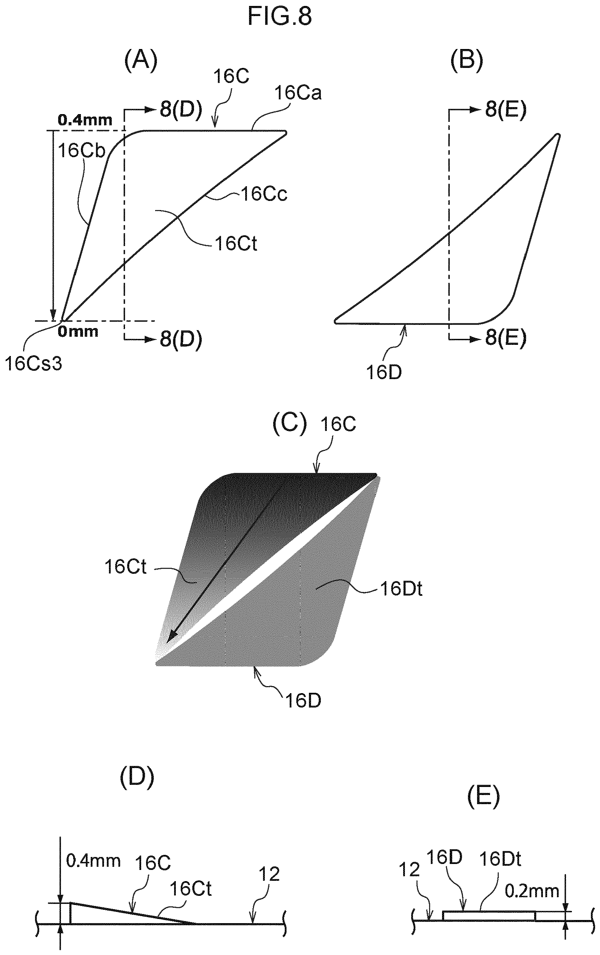

As illustrated in Fig. 8, the reflective piece 16C has the same plan view profile (a triangular shape) as the reflective piece 16A.

Considered overall, the reflective piece 16C has a triangular column shape that projects out by a short height from the base portion of the tire side portion 12. In the reflective piece 16C, a first side 16Ca has the greatest height (for example a height of 0.4 mm), and the reflective piece 16C is inclined downward on progression from the first side 16Ca toward a connection portion 16Cs3 between a second side 16Cb and a third side 16Cc. The connection portion 16Cs3 has the lowest height of the reflective piece 16C (for example a height of 0 mm). Namely, an inclined face 16Ct of the reflective piece 16C is inclined downward on progression from the first side 16Ca toward the connection portion 16Cs3 between the second side 16Cb and the third side 16Cc, and has its lowest height at the connection portion 16Cs3 (for example, a height of 0 mm). Note that the inclined face 16Ct is a planar face.

In Fig. 8(C), an incline direction (downward sloping direction) of the inclined face 16Ct of the reflective piece 16C is indicated by an arrow. The darker the shading, the higher the location, while the lighter the shading, the lower the location.

### Reflective Piece 16D

As illustrated in Fig. 8, the reflective piece 16D has the same plan view profile (a triangular shape) as the reflective piece 16B.

Considered overall, the reflective piece 16D has a triangular column shape that projects out by a short, uniform height (for example 0.2 mm) from the base portion of the tire side portion 12. Note that an apex face 16Dt of the reflective piece 16D is a planar face running parallel to a bottom face 16b.

### Reflective Piece 16E

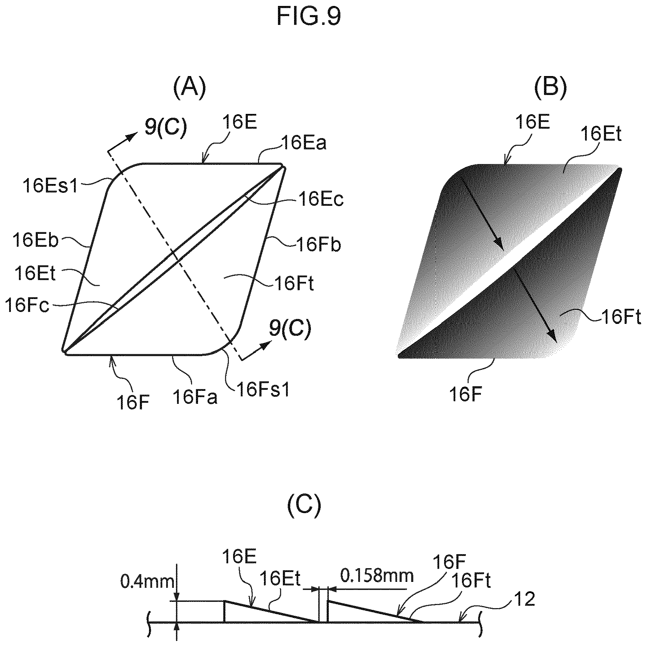

As illustrated in Fig. 9, the reflective piece 16E has the same plan view profile (a triangular shape) as the reflective piece 16A.

Considered overall, the reflective piece 16E has a triangular column shape that projects out by a short height from the base portion of the tire side portion 12. In the reflective piece 16E, a connection portion 16Es1 between a first side 16Ea and a second side 16Eb has the greatest height (for example a height of 0.4 mm), and the reflective piece 16E is inclined downward on progression toward a third side 16Ec. The third side 16Ec has the lowest height of the reflective piece 16E (for example a uniform height of 0 mm). Namely, an inclined face 16Et of the reflective piece 16E is inclined downward on progression from the connection portion 16Es1 between the first side 16Ea and the second side 16Eb toward the third side 16Ec, and has its lowest height at the third side 16Ec. Note that the inclined face 16Et is a planar face.

In Fig. 9(B), an incline direction (downward sloping direction) of the inclined face 16Et of the reflective piece 16B is indicated by an arrow. The darker the shading, the higher the location, while the lighter the shading, the lower the location.

### Reflective Piece 16F

As illustrated in Fig. 9, the reflective piece 16F has the same plan view profile (a triangular shape) as the reflective piece 16B.

As illustrated in Fig. 9, considered overall, the reflective piece 16F has a triangular column shape that projects out by a short height from the base portion of the tire side portion 12. In the reflective piece 16F, a third side 16Fc has the greatest height (for example a height of 0.4 mm), and the reflective piece 16F is inclined downward on progression toward a connection portion 16Fs1 between a first side 16Fa and a second side 16Fb, such that the connection portion 16Fs1 has the lowest height of the reflective piece 16F (for example a height of 0 mm). Namely, an inclined face 16Ft of the reflective piece 16F is inclined downward on progression from the third side 16Fc toward the connection portion 16Fs1 between the first side 16Fa and the second side 16Fb, and has its lowest height at the connection portion 16Fs1. Note that the inclined face 16Ft is a planar face.

In Fig. 9(B), an incline direction (downward sloping direction) of the inclined face 16Ft of the reflective piece 16F is indicated by an arrow. The darker the shading, the higher the location, while the lighter the shading, the lower the location.

### Reflective Piece 16G

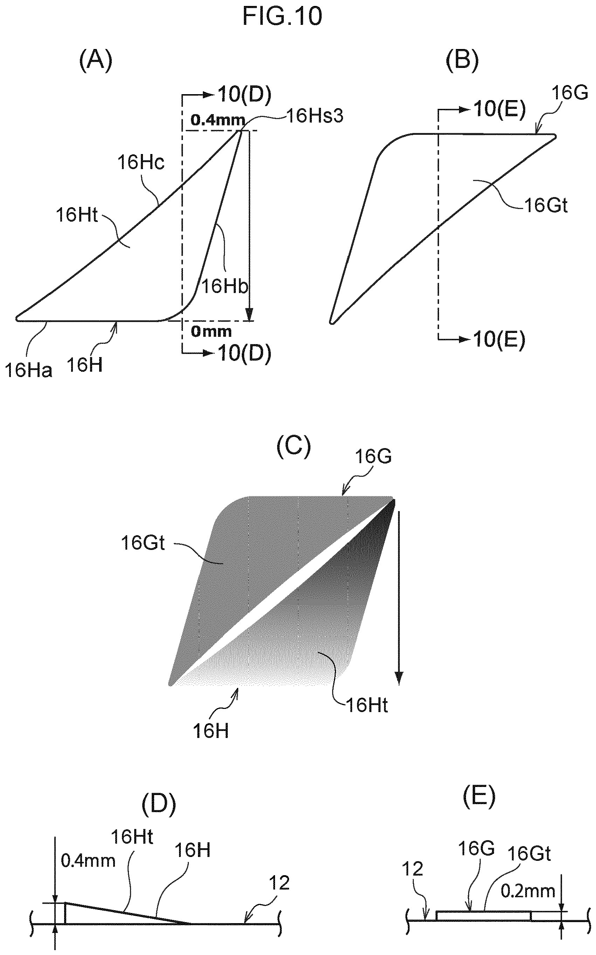

As illustrated in Fig. 10, the reflective piece 16G has the same plan view profile (a triangular shape) as the reflective piece 16A.

Considered overall, the reflective piece 16G has a triangular column shape that projects out by a short, uniform height (for example 0.2 mm) from the base portion of the tire side portion 12. An apex face 16Gt of the reflective piece 16G is a planar face running parallel to a bottom face 16b.

### Reflective Piece 16H

As illustrated in Fig. 10, the reflective piece 16H has the same plan view profile (a triangular shape) as the reflective piece 16B.

As illustrated in Fig. 10, considered overall, the reflective piece 16H has a triangular column shape that projects out by a short height from the base portion of the tire side portion 12. In the reflective piece 16H, a connection portion 16Hs3 between a second side 16Hb and a third side 16Hc has the greatest height (for example a height of 0.4 mm), and the reflective piece 16H is inclined downward on progression toward a first side 16Ha, such that the first side 16Ha has the lowest height of the reflective piece 16B (for example a uniform height of 0 mm). Namely, an inclined face 16Ht of the reflective piece 16H is inclined downward on progression from the connection portion 16Hs3 between the second side 16Hb and the third side 16Hc toward the first side 16Ha, and has its lowest height at the first side 16Ha. Note that the inclined face 16Ht is a planar face.

In Fig. 10(C), an incline direction (downward sloping direction) of the inclined face 16Ht of the reflective piece 16H is indicated by an arrow. The darker the shading, the higher the location, while the lighter the shading, the lower the location.

As illustrated in Fig. 3, narrow elongated rhombus shaped gaps S1 are formed extending in a diagonal direction between the reflective piece 16A and the reflective piece 16B, between the reflective piece 16C and the reflective piece 16D, between the reflective piece 16E and the reflective piece 16F, and between the reflective piece 16G and the reflective piece 16H, and correspond to the base portion of the tire side portion 12.

Moreover, a gap S2 of uniform width (for example 0.1 mm) is provided between one reflective cell 20 and another reflective cell 20 arranged in the short direction of the reflective cells 20. Such gaps S2 also correspond to the base portion of the tire side portion 12.

The respective apex faces (inclined faces) of the reflective pieces 16 of the decorative body 14 are preferably smoother than the tire side portion 12 so as to reflect light more regularly, or in other words so as to scatter light less. The surface roughness thereof is preferably from 1 to 15 Rz (Rt).

The incline angles with respect to the surface of the tire side portion 12 (the bottom faces 16b of the reflective pieces) of the inclined face 16At of the reflective piece 16A, the inclined face 16Bt of the reflective piece 16B, the inclined face 16Ct of the reflective piece 16C, the inclined face 16Et of the reflective piece 16E, the inclined face 16Ft of the reflective piece 16F, and the inclined face 16Ht of the reflective piece 16H are preferably within a range of from 3° to 60°, are more preferably within a range of from 4° to 45°, and are even more preferably within a range of from 5° to 30°.

### Operation and Advantageous Effects

When light (for example external light such as sunlight) is shone onto the decorative body 14, this light is reflected by the respective apex faces of the respective reflective pieces. The respective apex faces of the respective reflective pieces configuring the decorative body 14 face in various directions (see Fig. 6), and the tire side portion 12 on which the decorative body 14 is formed has a curved face. Accordingly, for example, when an observer standing directly in front or at an oblique front side of the tire 10 observes the tire 10, the apex faces reflecting the light toward the observer are distributed between various positions in the decorative body 14. When the tire 10 rotates, or when the observer moves while the tire 10 is stationary, such that the observer and the decorative body 14 of the tire 10 move relative to each other, the apex faces reflecting the light toward the observer change together with this relative movement, such that the positions of locations (namely the inclined faces and the apex faces) that appear to light up when the observer looks at the decorative body 14 change randomly to create a shifting impression, giving the decorative body 14 an external appearance that appears to sparkle.

The decorative body 14 of the present exemplary embodiment is configured including at least three types of the reflective pieces 16 with different vector orientations from each other when the tire side portion 12 is viewed in plan view. This enables the sparkling impression to be enhanced in comparison to cases in which the decorative body 14 is configured including reflective pieces that all have the same vector orientation as each other, or cases in which the decorative body 14 is configured including two types of the reflective pieces 16 with different vector orientations from each other.

Moreover, in the decorative body 14 of the present exemplary embodiment, the inclined face 16At of the reflective piece 16A, the inclined face 16Bt of the reflective piece 16B, the inclined face 16Ct of the reflective piece 16C, the inclined face 16Et of the reflective piece 16E, the inclined face 16Ft of the reflective piece 16F, and the inclined face 16Ht of the reflective pieces 16A to 16H, these being the inclined faces of the respective reflective pieces 16 having the smallest incline angle with respect to the bottom faces 16b, each have an incline angle with respect to the tire side portion 12 (the bottom face 16b of the reflective piece) within a range of from 3° to 60°, thereby enabling the sparkling impression to be enhanced in comparison to cases in which the incline angles are outside of this range.

The decorative body 14 is thus capable of improving the visual impact of the tire 10 of the present exemplary embodiment, and capable of creating an impression of high quality stemming from a textured effect.

Note that if the incline angle is less than 3°, the incline angle of the respective inclined faces becomes too small, and is close to becoming parallel to the surface of the tire side portion 12, and do not sufficiently reflect light in a manner that enhances the sparkling impression. On the other hand, if the incline angle is greater than 60°, the incline angle of the respective inclined faces becomes too large, thus decreasing the surface area of the respective inclined faces in plan view of the tire side portion 12, making the sparkling impression difficult to enhance.

In the present exemplary embodiment, the reflective cells 20 are each configured by the eight types of reflective pieces 16A to 16H. The reflective cells 20 are tessellated along both the length direction and the short direction to configure the decorative body 14. This enables mold design and processing to form the tire 10 to be simplified in comparison to cases in which the inclined faces of all the reflective pieces configuring the decorative body 14 have different vectors to each other.

In the exemplary embodiment described above, the greatest height of the reflective pieces 16A, 16B, 16C, 16E, 16F, and 16H is 0.4 mm. However, the greatest height is not limited to 0.4 mm. Moreover, although the heights of the reflective pieces 16D and 16G are 0.2 mm, the heights are not limited to 0.2 mm. Note that the reflective pieces 16A to 16H preferably project out from the base portion of the tire side portion 12 by 0.1 mm to 1.5 mm.

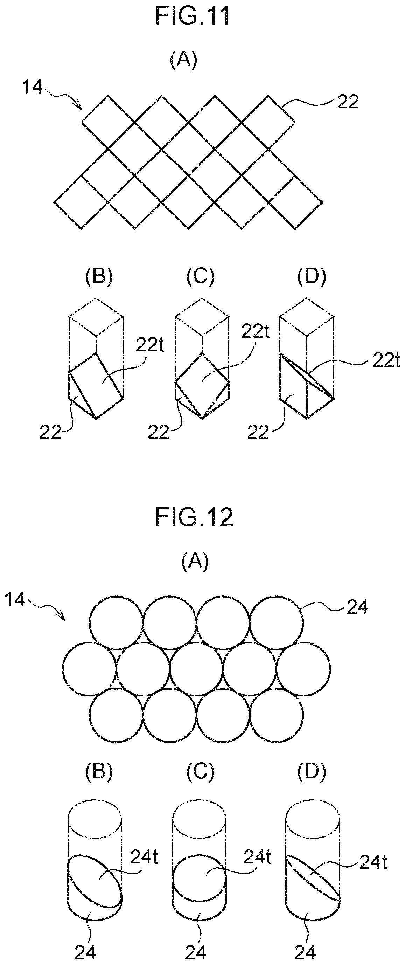

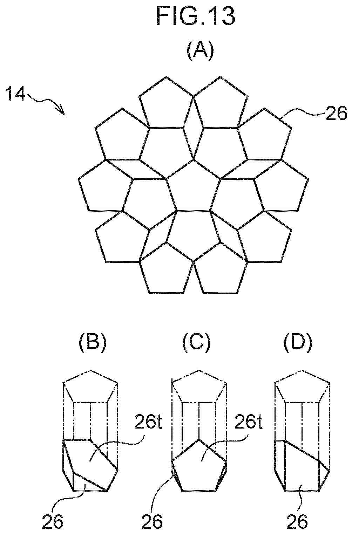

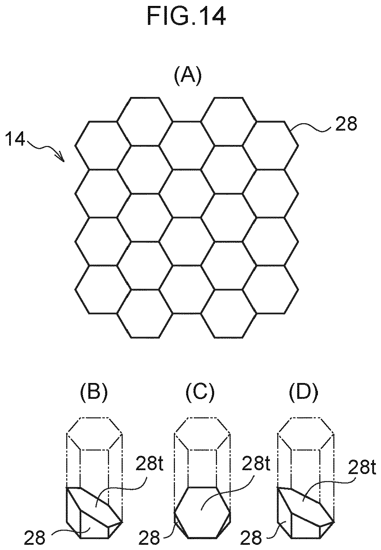

In the exemplary embodiment described above, each of the reflective pieces 16 configuring the decorative body 14 has a triangular column shape. However, the present invention is not limited thereto, and for example, the decorative body 14 may be configured by reflective pieces 22 with square column shapes having a square shape in plan view as illustrated in Fig. 11(A), with inclined faces 22t thereof having vectors running in different directions to each other as illustrated in Fig. 11(B) to Fig. 11(D). Alternatively, the decorative body 14 may be configured by reflective pieces 24 with circular column shapes having a circular shape in plan view as illustrated in Fig. 12, with inclined faces 24t thereof having vectors running in different directions to each other as illustrated in Fig. 12(B) to Fig. 12(D). Alternatively, the decorative body 14 may be configured by reflective pieces 26 with pentagonal column shapes having a pentagonal shape in plan view as illustrated in Fig. 13, with inclined faces 26t thereof having vectors running in different directions to each other as illustrated in Fig. 13(B) to Fig. 13(D). Alternatively, the decorative body 14 may be configured by reflective pieces 28 with hexagonal column shapes having a hexagonal shape in plan view as illustrated in Fig. 14, with inclined faces 28t thereof having vectors running in different directions to each other as illustrated in Fig. 14(B) to Fig. 14(D). In this manner, various other shapes may be adopted for the plan view profiles of the reflective pieces. Moreover, the decorative body 14 may be configured by a combination of reflective pieces having different shaped bottom faces.

Further explanation follows regarding the decorative body 14.

As an example, a first solid shape pair 30 is defined as a pair of the reflective pieces 22 disposed adjacently to each other with a vector (arrow) start point of one of the reflective pieces 22 and the vector start point of the other of the reflective pieces 22 being adjacent to each other, and the vector of the one reflective piece 22 and the vector of the other reflective piece 22 being oriented in opposite directions to each other as illustrated in Fig. 15(A). A second solid shape pair 32 is defined as a pair of the reflective pieces 22 disposed adjacently to each other with a vector end point of one of the reflective pieces 22and a vector end point of the other of the reflective pieces 22 being adjacent to each other, and the vector of the one reflective piece 22 and the vector of the other reflective piece 22 being oriented in opposite directions to each other as illustrated in Fig. 15(B). A solid shape group 34 is defined as a collection of three or more consecutive reflective pieces 22 having the same vector orientation as each other, as illustrated in Fig. 15(C) and Fig. 15(D). A third solid shape pair 36 is defined as a pair of two of the reflective pieces 22 not belonging to any out of the first solid shape pair 30, the second solid shape pair 32, or the solid shape group 34, as illustrated in Fig. 15(E) and Fig. 15(F). A first condition is satisfied when the combined surface area of the third solid shape pairs 36 is greater than the combined surface area of the first solid shape pairs 30 when the tire side portion 12 is viewed in plan view. A second condition is satisfied when the combined surface area of the third solid shape pairs 36 is greater than the combined surface area of the second solid shape pairs 32 when the tire side portion 12 is viewed in plan view. A third condition is satisfied when the combined surface area of the third solid shape pairs 36 is greater than the combined surface area of solid shape groups 34. The decorative body 14 should satisfy all of the first condition, the second condition, and the third condition. In other words, as long as the above conditions are satisfied, the first solid shape pair 30, the second solid shape pair 32, and the solid shape group 34 may be present to some extent in the decorative body 14. Note that in order to emphasize the sparkling impression, the decorative body 14 preferably satisfies a relationship in which the combined surface area of the third solid shape pairs 36 is greater than the combined surface area of the first solid shape pairs 30, plus the combined surface area of the second solid shape pairs 32, plus the combined surface area of the solid shape groups 34.

Note that the first solid shape pair 30, the second solid shape pair 32, and the solid shape group 34 make the sparkling impression more difficult to obtain, and thus do not need to be present in the decorative body 14. In the decorative body 14 in the exemplary embodiment described above, the third solid shape pair 36 corresponds to the first set 18A, the second set 18B, the third set 18C, and the fourth set 18D. In the decorative body 14 in the exemplary embodiment described above, configurations corresponding to the first solid shape pair 30, the second solid shape pair 32, and the solid shape group 34 described above are not provided.

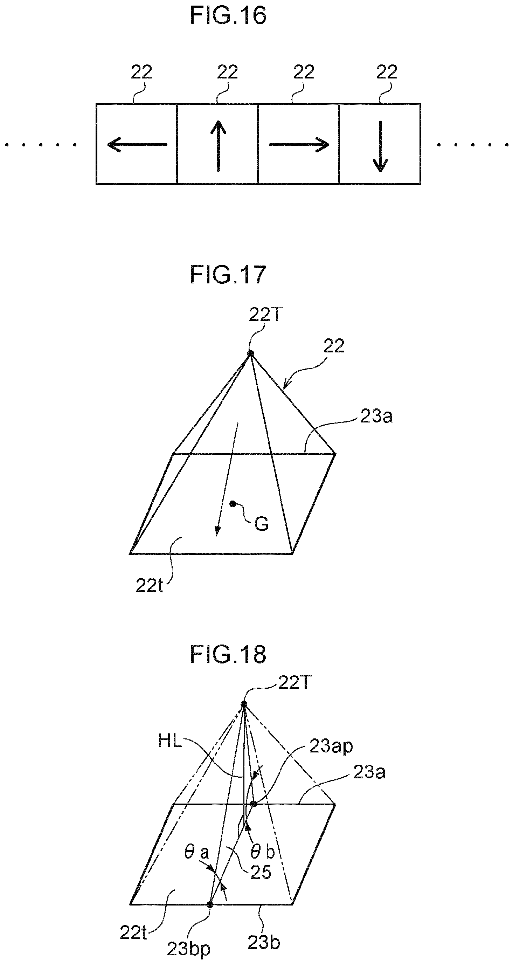

Moreover, in the decorative body 14 it is preferable to eliminate configurations in which, when as illustrated in Fig. 16 as an example, three of the reflective pieces 22 disposed consecutively from one side to another side are considered together in plan view of the tire side portion 12, a rotation direction orientation of the vectors changes by the same angle in the same rotation direction from the one side to the other side with reference to a normal line to the surface of the tire side portion 12 (for example 90° in Fig. 16). If three reflective pieces 22 in which the rotation direction orientation of the vectors changes by the same angle in the same rotation direction are consecutive to each other, this creates the impression of a regular arrangement of the inclined faces, with the result that the arrangement of the inclined faces that reflect light appears insufficiently random.

The surface area of the inclined face having the smallest incline angle is preferably within a range of from 70% to 100% of the surface area of the bottom face 16b of the corresponding reflective piece 16 when the reflective piece 16 is viewed in plan view. This enables the sparkling impression to be emphasized. Moreover, from 3 to 200 of the reflective pieces 16 are preferably provided per 1 cm², and more preferably from 10 to 100 of the reflective pieces 16 are provided per 1 cm². This enables the sparkling impression to be emphasized.

Additional explanation follows regarding the light reflecting apex faces of the reflective pieces.

In the present exemplary embodiment, within the reflective pieces serving as examples of solid shapes, the face that reflects light toward an observer in order to obtain a sparkling impression is the inclined face having the smallest incline angle with respect to the bottom face of the reflective piece. As illustrated in Fig. 17, when considering a reflective piece 22 with a square shaped bottom face, the highest location (apex) 22T of the reflective piece 22 is preferably positioned above and further toward a peripheral outside of the bottom face of the reflective piece 22 than the center of gravity G of the bottom face of the reflective piece 22 in plan view, in order to increase the surface area of the inclined face that reflects light. Note that although not illustrated in the drawings, in cases in which the highest location is a side, a length direction central portion of that side configures the apex 22T. In the reflective piece 22 illustrated in Fig. 17, the highest location 22T is positioned at a location close to a side 23a of the bottom face. This enables a face to be formed with the largest surface area (the inclined face having the smallest incline angle with respect to the bottom face) out of the plural faces other than the bottom face of the reflective piece 22.

As illustrated in Fig. 18, when considering a triangular shaped hypothetical plane 25 including a perpendicular line HL that passes through the highest location 22T of a reflective piece 22 and is perpendicular to the bottom face, and also includes a given point 23ap on the side 23a closest to the highest location 22T out of the sides of bottom face and a given point 23bp on a side 23b opposing the side 23a, if an angle formed between the bottom side of the hypothetical plane 25 and the sloping side on one side of the hypothetical plane 25 (the side linking the highest location 22T and the point 23ap together) is denoted θa, and an angle formed between the bottom side of the hypothetical plane 25 and the other sloping side of the hypothetical plane 25 (the side linking the highest location 22T and the given point 23bp) is denoted θb, then θb is preferably no less than 85° and no greater than 95°. This enables the surface area of the inclined face 22t set with the smallest incline angle with respect to the bottom face of the reflective piece 22 to be increased, thus enabling the sparkling impression to be emphasized.

Additional explanation follows regarding vectors of the light reflecting apex faces of the reflective pieces.

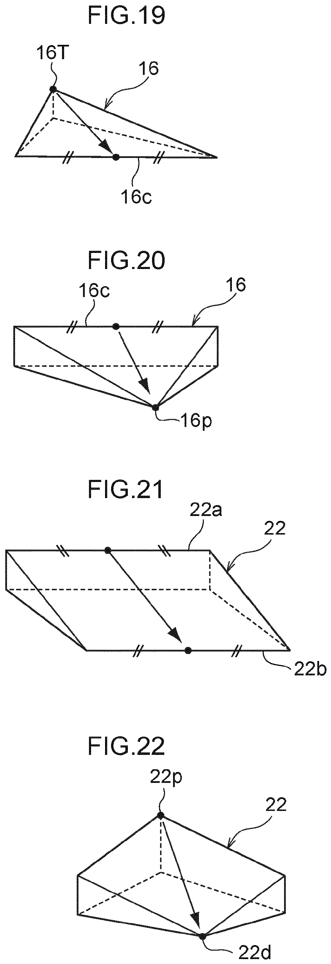

In the reflective pieces serving as examples of solid shapes, the vector of the inclined face is defined as the direction from the highest location side toward the lowest location side of the inclined face having the smallest incline angle with respect to the bottom face of the reflective piece. However, as illustrated in Fig. 19, for example, in the triangular column shaped reflective pieces 16, in cases in which an apex 16T of any of the triangular shapes is the highest location and a side 16c opposing the apex 16T is the lowest location, the direction from the apex 16T toward a center point 16cc of the side 16c corresponds to the vector (as indicated by the arrow).

As illustrated in Fig. 20, in the triangular column shaped reflective pieces 16, in cases in which the side 16c of any of the triangular shapes is the highest location (with a uniform height) and a triangular apex 16p opposing the side 16c is the lowest location, the direction from the center point of the side 16c toward the apex 16p corresponds to the vector (as indicated by the arrow).

As illustrated in Fig. 21, in the square column shaped reflective pieces 22, in cases in which a side 22a of any of the square shapes is the highest location (with a uniform height) and an opposing side 22b is the lowest location (with a uniform height), the direction from the center point of the side 22a toward the center point of the side 22b corresponds to the vector (as indicated by the arrow).

As illustrated in Fig. 22, in the square column shaped reflective pieces 22, in cases in which a corner 22p of any of the square shapes is the highest location, and an opposing corner 22d is the lowest location, the direction from the one corner 22p to the other corner 22d corresponds to the vector (as indicated by the arrow).

Regardless of the shape, if the inclined face having the smallest incline angle with respect to the bottom face of the reflective piece is highest at a side with a uniform height, and lowest at a side with a uniform height, the vector start point is at the center point of the highest side, and the vector end point is at the center point of the lowest side. Moreover, in cases in which the inclined face has a circular shape, an elliptical shape, or the like, the highest point of an outer peripheral portion of the inclined face is the vector start point, and the lowest point of the outer peripheral portion of the inclined face is the vector end point.

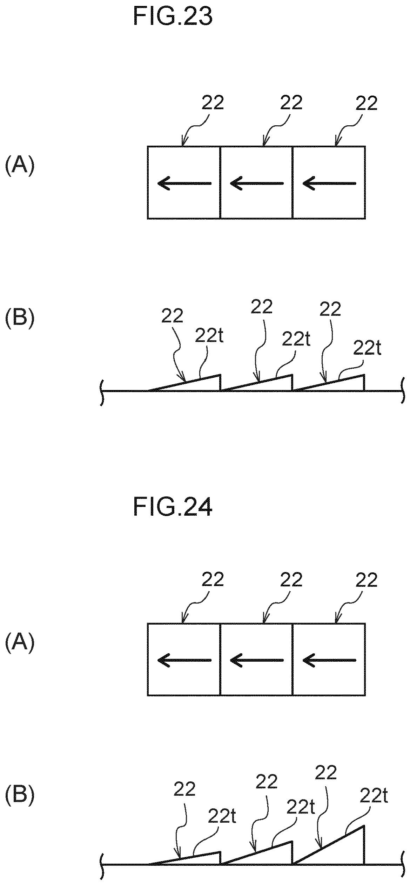

Note that if a case in which three reflective pieces 22 with inclined faces 22t having the same incline angle as each other are consecutive to each other as illustrated in Fig. 23 is compared to a case in which three reflective pieces 22 with inclined faces 22t having different incline angles and heights to each other are consecutive to each other as illustrated in Fig. 24, the latter is preferable in terms of obtaining a random appearance. Note that three or more of the reflective pieces 22 with inclined faces 22t having different incline angles and heights to each other may be provided consecutively to each other.

### Test Example 1

Table 1 below illustrates evaluation results ranked in four grades, namely A, B, C, and D, to represent the level of the sparkling impression of decorative bodies in which the angles of the inclined faces (apex faces) having the smallest incline angle of the reflective pieces are varied. The sensory evaluation results signify the following: A = very good, B = good, C = acceptable, D = unacceptable.

The basic structure of the decorative bodies is similar to that described in the above exemplary embodiment (with the exception of the variation described above).

### Sensory Evaluation Test Method

- In anticipation of being observed on a tire fitted to a vehicle, the decorative body is observed as a target in a state illuminated by light from above at an oblique angle of 45° from directly in front of the tire side surface applied with the target. The decorative body is observed from a position perpendicular to and directly in front of the tire side surface. The decorative body evaluated by being observed while moving toward the left and right by no greater than 50 cm to each side.
- If the observer is not moving, as above the decorative body is evaluated by being observed from a position perpendicular to and directly in front of the tire side surface while rotating the tire by 45° to both the left and right.

## Claims

1. A decorative body (14) comprising:
a plurality of solid shapes including an inclined face inclined in a direction that is not a direction of a bottom face (16b) configuring a surface of a tire side portion (12), or in a direction of a plane perpendicular to the bottom face,
an incline angle of an inclined face (16At, 16Bt, 16Ct, 16Et, 16Ft, 16Ht) having a smallest incline angle with respect to the bottom face of a corresponding solid shape being set within a range of from 3° to 60° with respect to the bottom face; **characterized by**
at least three types of the solid shapes having different vector orientations from each other when the tire side portion is viewed in plan view and when a vector is defined as an inclined face vector running in a direction from a center point of a highest location side toward a center point of lowest location side of the inclined face having the smallest incline angle.

2. The decorative body of claim 1, wherein the incline angle is set within a range of from 4° to 45°.

3. The decorative body of claim 1, wherein the incline angle is set within a range of from 5° to 30°.

4. The decorative body of any one of claim 1 to claim 3, wherein the solid shapes include a solid shape that has its greatest height at a side located above an outer side of the bottom face, or a solid shape that has a single apex (16T, 22T) located above an outer side of the bottom face.

5. The decorative body of any one of claim 1 to claim 4, wherein a surface area taken up by the inclined faces having the smallest incline angle occupies a range of from 70% to 100% per unit surface area in plan view.

6. The decorative body of any one of claim 1 to claim 5, wherein the inclined faces having the smallest incline angle are planar faces that are smoother than the tire side portion.

7. The decorative body of any one of claim 1 to claim 6, wherein from 3 to 200 of the solid shapes are provided per 1 cm².

8. The decorative body of any one of claim 1 to claim 7, wherein in a case in which the bottom face is a polygonal shape with four or more sides, a number of faces perpendicular to the bottom face is smaller than a number of sides of the bottom face for some of the plurality of solid shapes.

9. The decorative body of any one of claim 1 to claim 8, wherein at least some of the plurality of solid shapes are solid shapes having different heights from each other.

## Patentansprüche

1. Zierkörper (14), umfassend:
eine Vielzahl von festen Formen, die eine geneigte Fläche einschließen, die in eine Richtung, die nicht eine Richtung einer Bodenfläche (16b) ist, die eine Oberfläche eines Reifenseitenabschnitts (12) konfiguriert, oder in eine Richtung einer Ebene senkrecht zu der Bodenfläche geneigt ist,
einen Neigungswinkel einer geneigten Fläche (16At, 16Bt, 16Ct, 16Et, 16Ft, 16Ht) mit einem kleinsten Neigungswinkel in Bezug auf die Bodenfläche einer entsprechenden festen Form, der innerhalb eines Bereichs von 3° bis 60° in Bezug auf die Bodenfläche eingestellt ist, **dadurch gekennzeichnet, dass**
mindestens drei Arten der festen Formen voneinander verschiedene Vektorausrichtungen aufweisen, wenn der Reifenseitenabschnitt in Draufsicht betrachtet wird und wenn ein Vektor als ein Vektor einer geneigten Fläche definiert ist, die in eine Richtung von einem Mittelpunkt einer Seite einer höchsten Stelle zu einem Mittelpunkt einer Seite einer niedrigsten Stelle der geneigten Fläche mit dem kleinsten Neigungswinkel verläuft.

2. Zierkörper nach Anspruch 1, wobei der Neigungswinkel innerhalb eines Bereichs von 4° bis 45° eingestellt ist.

3. Zierkörper nach Anspruch 1, wobei der Neigungswinkel innerhalb eines Bereichs von 5° bis 30° eingestellt ist.

4. Zierkörper nach einem der Ansprüche 1 bis 3, wobei die festen Formen eine feste Form, deren größte Höhe sich an einer Seite oberhalb einer äußeren Seite der Bodenfläche befindet, oder eine feste Form einschließen, die einen einzelnen Scheitelpunkt (16T, 22T) aufweist, der sich oberhalb einer äußeren Seite der Bodenfläche befindet.

5. Zierkörper nach einem der Ansprüche 1 bis 4, wobei eine Fläche, die von den geneigten Flächen mit dem kleinsten Neigungswinkel aufgenommen ist, einen Bereich von 70 % bis 100 % pro Mantelflächeneinheit in einer Draufsicht einnimmt.

6. Zierkörper nach einem der Ansprüche 1 bis 5, wobei die geneigten Flächen mit dem kleinsten Neigungswinkel planare Flächen sind, die glatter als der Reifenseitenabschnitt sind.

7. Zierkörper nach einem der Ansprüche 1 bis 6, wobei 3 bis 200 der festen Formen pro 1 cm² vorgesehen sind.

8. Zierkörper nach einem der Ansprüche 1 bis 7, wobei in einem Fall, in dem die Bodenfläche eine polygonale Form mit vier oder mehr Seiten ist, bei einigen der Vielzahl von festen Formen eine Anzahl von Flächen senkrecht zu der Bodenfläche kleiner als eine Anzahl von Seiten der Bodenfläche ist.

9. Zierkörper nach einem der Ansprüche 1 bis 8, wobei mindestens einige der Vielzahl von festen Formen feste Formen mit voneinander verschiedenen Höhen sind.

## Revendications

1. Corps décoratif (14), comprenant :
une pluralité de formes solides incluant une face inclinée, inclinée dans une direction ne constituant pas une direction d'une face inférieure (16b) configurant une surface d'une partie latérale de bandage pneumatique (12), ou une direction d'un plan perpendiculaire à la face inférieure ;
un angle d'inclinaison d'une face inclinée (16At, 16Bt, 16Ct, 16Et, 16Ft, 16Ht) ayant un angle d'inclinaison le plus petit par rapport à la face inférieure d'une forme solide correspondante qui est ajusté dans un intervalle allant de 3° à 60° par rapport à la face inférieure, **caractérisé par :**
**le fait qu'**au moins trois types des formes solides ont des orientations de vecteur différentes les unes des autres lorsque la partie latérale de bandage pneumatique est vue dans une vue en plan et lorsqu'un vecteur est défini comme un vecteur de face inclinée s'étendant dans une direction allant d'un point central d'un côté d'un emplacement le plus élevée vers un point central du côté d'un emplacement le plus bas de la face inclinée ayant l'angle d'inclinaison le plus petit.

2. Corps décoratif selon la revendication 1, dans lequel l'angle d'inclinaison est ajusté dans un intervalle allant de 4° à 45°.

3. Corps décoratif selon la revendication 1, dans lequel l'angle d'inclinaison est ajusté dans un intervalle allant de 5° à 30°.

4. Corps décoratif selon l'une quelconque des revendications 1 à 3, dans lequel les formes solides incluent une forme solide dont la hauteur maximale est au niveau d'un côté situé au-dessus d'un côté externe de la face inférieure, ou une forme solide ayant un unique apex (16T, 22T) situé au-dessus d'un côté externe de la face inférieure.

5. Corps décoratif selon l'une quelconque des revendications 1 à 4, dans lequel une superficie occupée par la face inclinée ayant l'angle d'inclinaison le plus petit occupe une plage représentant 70% à 100% par unité d'aire de surface dans une vue en plan.

6. Corps décoratif selon l'une quelconque des revendications 1 à 5, dans lequel les faces inclinées ayant l'angle d'inclinaison le plus petit sont des faces planes qui sont plus lisses que la partie latérale de bandage pneumatique.

7. Corps décoratif selon l'une quelconque des revendications 1 à 6, dans lequel 3 à 200 des formes solides sont prévues par 1 cm².

8. Corps décoratif selon l'une quelconque des revendications 1 à 7, dans lequel, dans un cas où la face inférieure est une forme polygonale avec quatre côtés ou plus, un nombre de faces perpendiculaires à la face inférieure est inférieur à un nombre de côtés de la face inférieure pour certaines formes de la pluralité de formes solides.

9. Corps décoratif selon l'une quelconque des revendications 1 à 8, dans lequel au moins certaines formes de la pluralité de formes solides sont des formes solides ayant des hauteurs différentes les unes des autres.
